# EUROPÄISCHE PATENTSCHRIFT

(11) **EP 3 321 456 B1**
(45) Veröffentlichungstag und Bekanntmachung des Hinweises auf die Patenterteilung: **08.01.2020**
(21) Anmeldenummer: 17200990.4
(22) Anmeldetag: 10.11.2017
(51) Int. Cl.: E05B 85/26, E05B 77/36

(54) **KRAFTFAHRZEUGSCHLOSS**
MOTOR VEHICLE LOCK
SERRURE DE VÉHICULE AUTOMOBILE

(30) Priorität: 10.11.2016 DE 202016106308 U
(43) Veröffentlichungstag der Anmeldung: 16.05.2018
(73) Patentinhaber: Brose Schliesssysteme GmbH & Co. KG, 42369 Wuppertal (DE)
(72) Erfinder: Schmidt, Tatjana, 51373 Leverkusen (DE); Graute, Ludger, 45130 Essen (DE); Gülkan, Serkan, 45529 Hattingen (DE)
(74) Vertreter: Gottschald Patentanwälte Partnerschaft mbB

(56) Entgegenhaltungen:
- EP-A1- 1 380 715
- DE-A1-102007 003 948
- DE-A1-102013 016 055
- DE-U1-202008 005 016
- DE-U1-202011 000 341
- US-A- 4 880 263

## Beschreibung

Die Erfindung betrifft ein Kraftfahrzeugschloss gemäß dem Oberbegriff von Anspruch 1 sowie eine Verstellelementanordnung eines Kraftfahrzeugs, dem ein solches Kraftfahrzeugschloss zugeordnet ist, gemäß Anspruch 13.

Das in Rede stehende Kraftfahrzeugschloss dient der Fixierung eines Verstellelements eines Kraftfahrzeugs. Bei dem Verstellelement handelt es sich beispielsweise um eine Kraftfahrzeugtür, um eine Sitzkomponente eines Kraftfahrzeugs o. dgl..

Das bekannte Kraftfahrzeugschloss (DE 102 39 553 A1), von dem die Erfindung ausgeht, ist einer Kraftfahrzeugtür zugeordnet. Das Kraftfahrzeugschloss wechselwirkt im montierten Zustand zur Fixierung der Kraftfahrzeugtür mit einem Schließbolzen o. dgl., der in einer Variante an der Karosserie des Kraftfahrzeugs angeordnet ist. Für den fixierenden Eingriff mit dem Schließbolzen ist eine verstellbare Schlossfalle vorgesehen, der eine verstellbare Sperrklinke zugeordnet ist. Bei geschlossener Kraftfahrzeugtür befindet sich die Schlossfalle in ihrem Schließzustand, in dem sie von der Sperrklinke gehalten wird.

Die Schlossfalle des bekannten Kraftfahrzeugschlosses ist mittels einer Schraubenfeder in Öffnungsrichtung vorgespannt. Diese Federvorspannung ist daraufhin ausgelegt, dass während des Öffnungsvorgangs unter allen Umständen eine Verstellung der Schlossfalle in den Öffnungszustand sichergestellt ist. Dabei ist ferner darauf zu achten, dass beim Zuschlagen der Kraftfahrzeugtür dem Einlaufen des Schließteils in die Schlossfalle möglichst wenig Widerstand entgegengesetzt wird, um Schließgeräusche zu vermeiden. Zur Vermeidung von Klappergeräuschen an der Eingriffsstelle zwischen Schlossfalle und Sperrklinke ist regelmäßig ein Fanglagerpuffer vorgesehen, der auf das Schließteil wirkt. Insgesamt stellt das bekannte Kraftfahrzeugschloss in akustischer Hinsicht nur einen Kompromiss dar.

Weitere bekannte Kraftfahrzeugschlösser (DE 20 2008 005 016 U1, EP 1 380 715 A1 und DE 10 2013 016 955 A1) weisen Federanordnungen auf, die auf die Schlossfalle und/oder die Sperrklinke in verschiedenen Schließstellungen unterschiedlich stark einwirken.

Der Erfindung liegt das Problem zugrunde, das bekannte Kraftfahrzeugschloss in akustischer Hinsicht zu verbessern.

Das obige Problem wird bei einem Kraftfahrzeugschloss gemäß dem Oberbegriff von Anspruch 1 durch die Merkmale des kennzeichnenden Teils von Anspruch 1 gelöst.

Wesentlich ist die grundsätzliche Überlegung, die im Hauptschließzustand befindliche Schlossfalle und die im Einfallzustand befindliche Sperrklinke zusätzlich miteinander zu verspannen, so dass während des Fahrbetriebs Klappergeräusche an der Eingriffsstelle zwischen Schlossfalle und Sperrklinke nicht mehr auftreten können. Hierfür ist das Kraftfahrzeugschloss mit einem Spannmechanismus ausgestattet, mit dem eine entsprechende mechanische Vorspannung genau dann in die Schlossfalle eingeleitet werden kann, wenn dies erforderlich ist, nämlich wenn sich die Schlossfalle im Hauptschließzustand und die Sperrklinke im Einfallzustand befinden.

Ganz allgemein wird vorgeschlagen, dass der Spannmechanismus bei im Schließzustand befindlicher Schlossfalle und bei im Einfallzustand befindlicher Sperrklinke in einen Spannzustand bringbar ist, in dem er eine mechanische Vorspannung in die Schlossfalle in deren Öffnungsrichtung einleitet und dass der Spannmechanismus in einen Lösezustand bringbar ist, in dem die auf den Spannmechanismus zurückgehende Vorspannung reduziert oder aufgelöst ist.

Bei der besonders bevorzugten Ausgestaltung gemäß Anspruch 3 geht die vorschlagsgemäße Vorspannung auf die Federkraft einer Federanordnung zurück, was sich kompakt und kostengünstig realisieren lässt.

Die weiter bevorzugten Ausgestaltungen gemäß den Ansprüchen 4 bis 6 betreffen vorteilhafte Varianten für die Erzeugung der vorschlagsgemäßen Vorspannung. Mit der Erzeugung der Vorspannung nach Art eines Keilgetriebes gemäß Anspruch 5 lassen sich hohe Vorspannungen mit vergleichsweise geringen Federkräften erzielen.

Die ebenfalls bevorzugten Ausgestaltungen gemäß den Ansprüchen 7 und 8 betreffen die Ausstattung des Spannmechanismus mit einem Spannhebel, was mit einer besonders hohen mechanischen Robustheit einhergeht.

Der vorschlagsgemäße Spannmechanismus lässt sich durch eine geeignete Kopplung mit dem Kraftfahrzeugschloss im Übrigen auf einfache Weise steuern, wie in den Ansprüchen 9 bis 11 vorgeschlagen wird.

Der Spannmechanismus kann grundsätzlich auch im Rahmen weiterer Schlossfunktionen genutzt werden, wie in Anspruch 12 für die Schließhilfsfunktion eines Kraftfahrzeugschlosses vorgeschlagen wird. Eine derartige Doppelnutzung des Spannmechanismus führt grundsätzlich zu einer kompakten und kostengünstigen Ausgestaltung.

Nach einer weiteren Lehre gemäß Anspruch 13, der eigenständige Bedeutung zukommt, wird eine Verstellelementanordnung mit einem Verstellelement und einem dem Verstellelement zugeordneten, vorschlagsgemäßen Kraftfahrzeugschloss als solche beansprucht. Dabei kann das Kraftfahrzeugschloss am Verstellelement oder am Kraftfahrzeug im Übrigen angeordnet sein. Auf alle Ausführungen zu dem Kraftfahrzeugschloss, die geeignet sind, die Verstellelementanordnung zu erläutern, darf verwiesen werden.

Im Folgenden wird die vorschlagsgemäße Lösung anhand einer lediglich ein Ausführungsbeispiel darstellenden Zeichnung näher erläutert. In der Zeichnung zeigt
- Fig. 1: ein vorschlagsgemäßes Kraftfahrzeugschloss in seinen wesentlichen Bestandteilen im Hauptschließzustand in einer Vorderansicht,

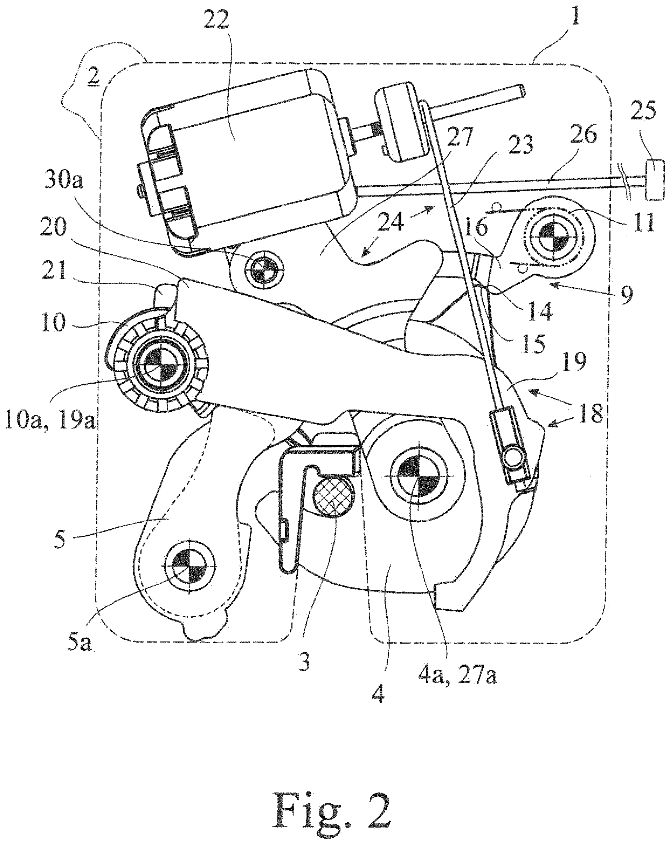

- Fig. 2: das Kraftfahrzeugschloss gemäß Fig. 1 in einer Rückansicht,
- Fig. 3: das Kraftfahrzeugschloss gemäß Fig. 1 in einer perspektivischen Ansicht und
- Fig. 4: das Kraftfahrzeugschloss gemäß Fig. 1 im Vorschließzustand in der Vorderansicht.

Das in der Zeichnung dargestellte Kraftfahrzeugschloss 1 dient der Fixierung eines Verstellelements 2 eines Kraftfahrzeugs. Die vorschlagsgemäße Lösung lässt sich auf alle denkbaren Arten von Verstellelementen eines Kraftfahrzeugs anwenden. Vorliegend steht die Anwendung der vorschlagsgemäßen Lehre auf ein als Kraftfahrzeugtür ausgestaltetes Verstellelement 2 im Vordergrund. Alle diesbezüglichen Ausführungen gelten für alle anderen Arten von Verstellelementen 2 entsprechend.

Es darf darauf hingewiesen werden, dass der Begriff "Kraftfahrzeugtür" vorliegend weit zu verstehen ist. Er umfasst Seitentüren, Hecktüren, Heckklappen, Heckdeckel, Motorhauben o. dgl..

Das Kraftfahrzeugschloss 1 wechselwirkt im montierten Zustand zur Fixierung des Verstellelements 2 mit einem Schließteil 3. Dabei ist das Kraftfahrzeugschloss 1 vorzugsweise am Verstellelement 2 angeordnet, während das Schließteil 3 am Kraftfahrzeug im Übrigen, insbesondere an der Kraftfahrzeugkarosserie, angeordnet ist.

Bei dem Schließteil 3 kann es sich um einen Schließbügel, einen Schließkeil, einen Schließbolzen o. dgl. handeln.

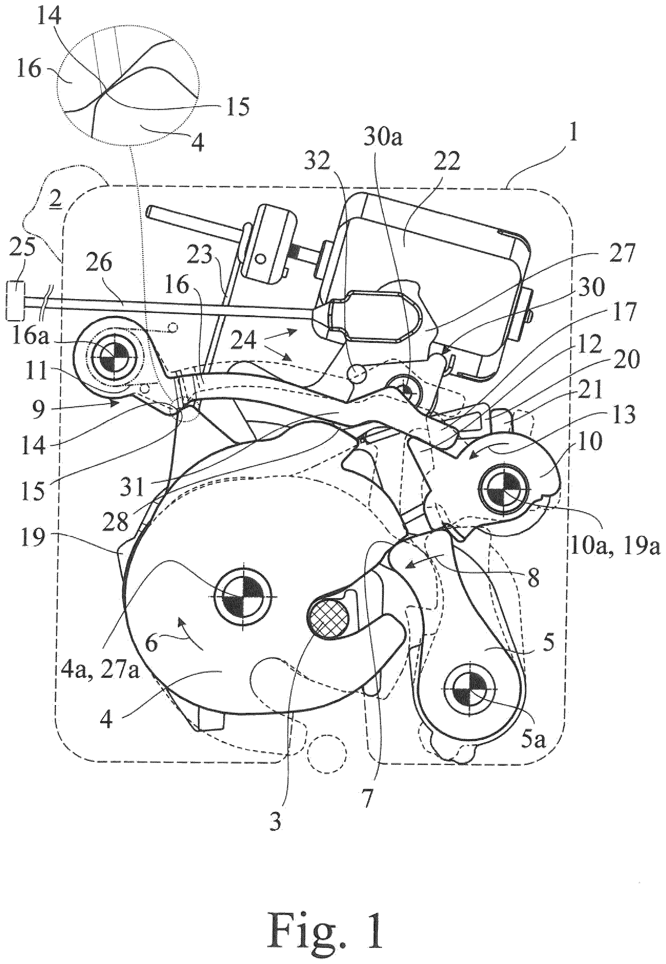

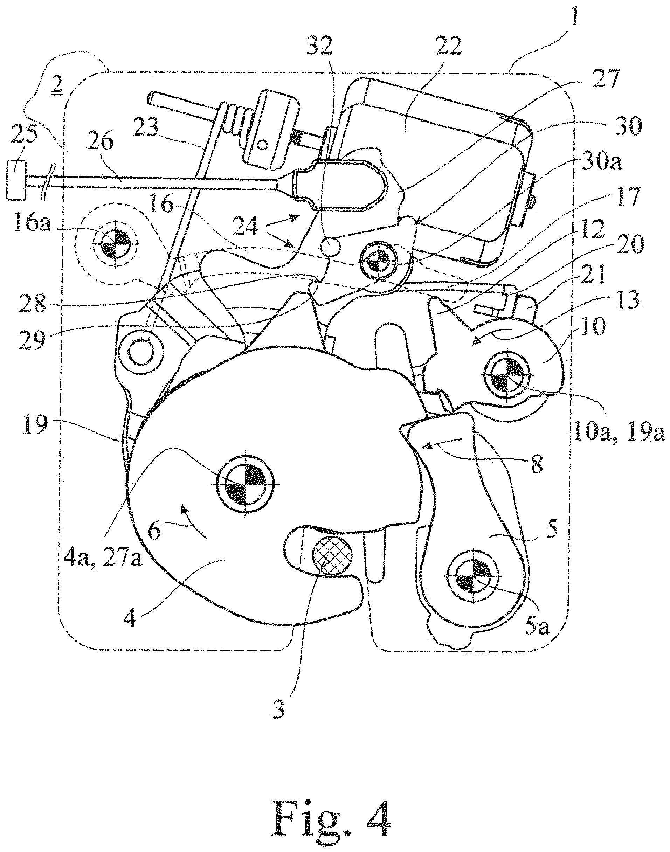

Das Kraftfahrzeugschloss 1 weist eine verstellbare Schlossfalle 4 und eine der Schlossfalle 4 zugeordnete, verstellbare Sperrklinke 5 auf. Die Schlossfalle 4 ist um eine Schlossfallenachse 4a schwenkbar. Sie lässt sich jedenfalls in einen Hauptschließzustand (Fig. 1), in einen Öffnungszustand (Fig. 1 in gestrichelter Linie) und hier und vorzugsweise in einen Vorschließzustand (Fig. 4) bringen. Im Hauptschließzustand steht die Schlossfalle 4 in fixierendem Eingriff mit dem Schließteil 3. Das gleiche gilt für den hier und vorzugsweise vorgesehenen Vorschließzustand. Im Öffnungszustand gibt die Schlossfalle 4 das Schließteil 3 frei. Die Schlossfalle 4 ist in ihre Öffnungsrichtung 6 federvorgespannt. Die Sperrklinke 5 ist um eine Sperrklinkenachse 5a schwenkbar. Sie lässt sich in einen Einfallzustand, in dem sie an einer Eingriffsstelle 7 in Eingriff mit der Schlossfalle 4 steht und die Schlossfalle 4 an der Eingriffsstelle 7 im Hauptschließzustand und hier und vorzugsweise auch im Vorschließzustand hält, bringen (Fig. 1, 4). Die Sperrklinke 5 lässt sich ferner in einen Aushebezustand bringen, in der sie die Schlossfalle 4 freigibt (in Fig. 1 in gestrichelter Linie). Die Sperrklinke 5 ist in ihre Einfallrichtung 8 federvorgespannt.

Wesentlich ist nun, dass das Kraftfahrzeugschloss 1 einen Spannmechanismus 9 aufweist, durch den sich die Schlossfalle 4 und die Sperrklinke 5 an der Eingriffsstelle 7 miteinander verspannen lassen. Hierfür ist der Spannmechanismus 9 bei im Hauptschließzustand befindlicher Schlossfalle 4 und bei im Einfallzustand befindlicher Sperrklinke 5 in einen Spannzustand bringbar, in dem der Spannmechanismus 9 eine mechanische Vorspannung in die Schlossfalle 4 in deren Öffnungsrichtung 6 einleitet. Dies bedeutet, dass der Spannmechanismus 9 bezogen auf die Schlossfallenachse 4a ein Drehmoment auf die Schlossfalle 4 ausübt. Fig. 1 zeigt, dass hiermit ein entsprechendes Verspannen der Schlossfalle 4 mit der Sperrklinke 5 an der Eingriffsstelle 7 einhergeht. Dies ist in Fig. 1 gezeigt. Fig. 1 zeigt in gestrichelter Linie, dass der Spannmechanismus 9 in einen Lösezustand bringbar ist, in dem die auf den Spannmechanismus 9 zurückgehende Vorspannung reduziert, oder wie dargestellt, aufgelöst ist, indem der Spannmechanismus 9 außer Eingriff von der Schlossfalle 4 steht. Die Funktionsweise des dargestellten Spannmechanismus 9 im Einzelnen wird weiter unten erläutert. Grundsätzlich kann es sich bei der Sperrklinke 5 um eine solche Sperrklinke handeln, die im Einfallzustand und bei im Hauptschließzustand befindlicher Schlossfalle 4 mit der Schlossfalle 4 verrastet, so dass sich die Sperrklinke 5 selbst in Einfallzustand hält. Hier und vorzugsweise ist dies lediglich bei im Vorschließzustand befindlicher Schlossfalle 4 der Fall. Bei im Hauptschließzustand befindlicher Schlossfalle 4 ist es im dargestellten Ausführungsbeispiel vorgesehen, dass ein Drehmoment auf die Schlossfalle in Öffnungsrichtung über die Eingriffsstelle 7 ein Drehmoment auf die Sperrklinke 5 in Ausheberichtung, also entgegen der Einfallrichtung 8, erzeugt. Entsprechend ist der Sperrklinke 5 eine Blockierklinke 10 zugeordnet, die die im Einfallzustand befindliche Sperrklinke 5 blockiert.

Die Blockierklinke 10 ist um eine Blockierklinkenachse 10a schwenkbar. Sie ist in ihre Einfallrichtung 13 federvorgespannt.

Fig. 1 zeigt, dass der Blockierklinke 10 eine Steuerfunktion für den Spannmechanismus 9 zukommt. Im Einzelnen hält die Blockierklinke 10 in ihrem Aushebezustand, der in Fig. 1 in gestrichelter Linie dargestellt ist, den Spannmechanismus 9 im Lösezustand, während die Blockierklinke 10 in ihrem Einfallzustand, der in Fig. 1 in durchgezogener Linie dargestellt ist, den Spannmechanismus 9 in den Spannzustand freigibt. Hier ist es besonders vorteilhaft, dass der Spannmechanismus 9 zur Erzeugung der Vorspannung auf die Schlossfalle 4 eine Federanordnung 11 aufweist, die in besonders bevorzugter Ausgestaltung gleichzeitig dafür sorgt, dass der Spannmechanismus 9 in den Spannzustand vorgespannt ist. Der Spannmechanismus 9 stützt sich also, getrieben durch die Federanordnung 11, an der Blockierklinke 10 ab, so dass sich eine Zustandsänderung des Spannmechanismus 9 durch eine Verstellung der Blockierklinke 10 leicht bewerkstelligen lässt. Hierfür weist die Blockierklinke 10 eine Nase 12 auf, die in entsprechenden Eingriff mit dem Spannmechanismus 9 bringbar ist.

Der Spannmechanismus 9 weist vorzugsweise eine Spannfläche 14 auf, die in dem in Fig. 1 in durchgezogener Linie gezeigten Spannzustand in Eingriff mit einer Gegenspannfläche 15 an der Schlossfalle 4 steht, wobei über den Eingriff zwischen Spannfläche 14 und Gegenspannfläche 15 die auf die Schlossfalle 4 wirkende, vorschlagsgemäße Vorspannung erzeugt wird. Dabei ist es weiter vorzugsweise so, dass die Spannfläche 14 und die Gegenspannfläche 15 zur Erzeugung der vorschlagsgemäßen Vorspannung nach Art eines Keilgetriebes miteinander wechselwirken.

Mit der vorschlagsgemäßen Lösung wird eine Verstellung der Schlossfalle 4 aus dem in Fig. 1 dargestellten Hauptschließzustand heraus weiter in Schließrichtung der Schlossfalle 4 gehemmt oder sogar gesperrt. Dadurch ist es der Schlossfalle 4 nicht möglich, in einen Überhubbereich zu schwenken, in dem die Schlossfalle 4 außer Eingriff von der Sperrklinke 5 steht. Dies gilt selbst für den Fall, dass das Schließteil 3 große Kräfte auf die Schlossfalle 4 in deren Schließrichtung ausübt. Solche Kräfte können im Fahrbetrieb beispielsweise durch Fahrbahnunebenheiten o. dgl. auftreten, was ohne den vorschlagsgemäßen Spannmechanismus 9 zu ungewünschten Klappergeräuschen an der Eingriffsstelle 7 führen würde.

In bevorzugter Ausgestaltung ist der Eingriff zwischen der Spannfläche 14 und der Gegenspannfläche 15 selbsthemmend derart, dass im Spannzustand eine Rückstellung der Schlossfalle 4 in deren Schließrichtung gesperrt ist. Dies bedeutet, dass der Spannmechanismus 9 nicht nur eine Vorspannung in die Schlossfalle 4 einleitet, sondern dass der Spannmechanismus 9 die Schlossfalle 4 gegen das Schwenken der Schlossfalle 4 in den Überhubbereich sperrt.

Alternativ kann es vorgesehen sein, dass der Eingriff zwischen der Spannfläche 14 und der Gegenspannfläche 15 formschlüssig ist derart, dass im Spannzustand eine Rückstellung der Schlossfalle (4) in deren Schließrichtung gesperrt ist.

Weiter alternativ kann es vorgesehen sein, dass der Eingriff zwischen der Spannfläche 14 und der Gegenspannfläche 15 nicht selbsthemmend ist derart, dass im Spannzustand eine Rückstellung der Schlossfalle 4 in deren Schließrichtung mit einer entsprechenden Rückstellung des Spannmechanismus 9 in Richtung des Lösezustands einhergeht. Hier weist der Spannmechanismus 9 also eine entsprechende Nachgiebigkeit auf, was speziell bei einer hohen Kraftwirkung des Schließteils 3 auf die Schlossfalle 4 in deren Schließrichtung materialschonend sein kann.

Der in der Zeichnung dargestellte und insoweit bevorzugte Spannmechanismus 9 zeigt einen mechanisch robusten und gleichzeitig kompakten strukturellen Aufbau. Der Spannmechanismus 9 ist hier mit einem Spannhebel 16 ausgestattet, der für die Überführung des Spannmechanismus 9 in den Spannzustand und den Lösezustand um eine Spannhebelachse 16a schwenkbar ist. Für die konstruktiv einfache Realisierung des Eingriffs mit der Schlossfalle 4 ist die Spannhebelachse 16a parallel zu der Schwenkachse 4a der Schlossfalle 4 ausgerichtet. Da hier und vorzugsweise die Sperrklinkenachse 5a parallel zu der Schlossfallenachse 4a ausgerichtet ist, ist die Spannhebelachse 16a auch parallel zu der Schwenkachse 5a der Sperrklinke 5 ausgerichtet. Um den Spannmechanismus 9, wie oben angesprochen, in den Spannzustand vorzuspannen, sorgt die Federanordnung 11 dafür, dass der Spannheben 16 auf die Schlossfalle 4, insbesondere auf die Gegenspannfläche 15 der Schlossfalle 4, vorgespannt ist. Die Federanordnung 11 ist hier und vorzugsweise nach Art einer Schenkelfeder ausgestaltet. Die Spannfläche 14 des Spannmechanismus 9 ist entsprechend an dem Spannhebel 16 angeordnet, wobei die Spannfläche 14 über ein Schwenken des Spannhebels 16, in Fig. 1 über ein Schwenken des Spannhebels 16 im Uhrzeigersinn, zu Erzeugung des Spannzustands in Eingriff mit der Schlossfalle 4, insbesondere in Eingriff mit der Gegenspannfläche 15 der Schlossfalle 4, bringbar ist. Zur Erzeugung des Lösezustands ist die Spannfläche 14 entsprechend über ein Schwenken des Spannhebels 16, in Fig. 1 über ein Schwenken des Spannhebels 16 im Gegenuhrzeigersinn, außer Eingriff von der Schlossfalle 4 bringbar.

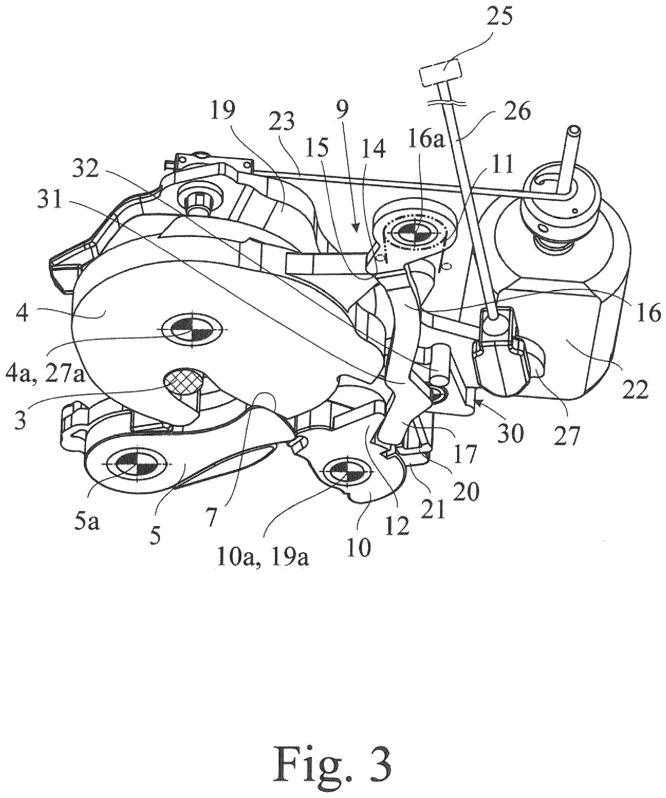

Es lässt sich einer Zusammenschau der Fig. 1, 3 und 4 entnehmen, dass der Spannhebel 16 einen Steuerabschnitt 17 aufweist, über den der Spannmechanismus 9 in den Spannzustand und in den Lösezustand überführbar ist. Dabei ist der Steuerabschnitt 17 in einem achsfernen Bereich des Steuerhebels 16 angeordnet, während die Sperrfläche 14 in einem achsnahen Bereich des Steuerhebels 16 angeordnet ist. Durch die resultierenden Hebelverhältnisse lässt sich der Spannhebel 16 mit einer geringen am Steuerabschnitt 17 aufzubringenden Kraftwirkung in den Lösezustand bringen, selbst wenn hohe Reibkräfte zwischen der Spannfläche 14 und der Gegenspannfläche 15 wirken sollten. Dieser Effekt wird unterstützt durch eine langgestreckte Formgebung des Spannhebels 16, der sich über die gesamte Breite des Kraftfahrzeugschlosses 1, hier jedenfalls über den Abstand zwischen Schlossfallenachse 4a und Sperrklinkenachse 5a, erstreckt.

Hier und vorzugsweise steht der Steuerabschnitt 17 in Eingriff mit der Blockierklinke 10, die den Spannhebel 16 über die Nase 12 gegen die Vorspannung der Federanordnung 11 in den Lösezustand drückt oder in den Spannzustand freigibt.

Ganz allgemein ist es so, dass der Spannmechanismus 9 derart mit dem Kraftfahrzeugschloss 1 im Übrigen, gekoppelt ist, dass der Spannmechanismus 9 im Rahmen eines Schließvorgangs, in dem die Schlossfalle 4 ihren Hauptschließzustand und die Sperrklinke 5 ihren Einfallzustand erreicht, hier und vorzugsweise federgetrieben durch die Vorspannung der Federanordnung 11 in den Spannzustand überführt wird. Vorzugsweise fällt der Spannmechanismus 9 in den Spannzustand nachdem, vorzugsweise unmittelbar nachdem, die Sperrklinke 5 ihren Einfallzustand vollständig erreicht hat. Damit wird verhindert, dass ein Verspannen zwischen Schlossfalle 4 und Sperrklinke 5 bei nur halb eingefallener Sperrklinke 5 stattfindet.

Wenn also beim Schließen der Kraftfahrzeugtür das Schließteil 3 in die Schlossfalle 4, in Fig. 1 nach oben, einläuft, wird die Schlossfalle 4 vom Öffnungszustand in den Hauptschließzustand überführt, wodurch die Sperrklinke 5 federgetrieben in ihren Einfallzustand und damit an der Eingriffsstelle 7 in Eingriff mit der Schlossfalle 4 kommt. Dadurch wiederum fällt die Blockierklinke 10 federgetrieben in ihren in Fig. 1 in durchgezogener Linie dargestellten Einfallzustand, so dass die Nase 12 der Blockierklinke 10 den Spannhebel 16 in Richtung der Schlossfalle 4 und damit in Richtung des Spannzustands freigibt. Der Spannhebel 16 kommt so von der in Fig. 1 in gestrichelter Linie dargestellten Stellung in die in Fig. 1 in durchgezogener Linie dargestellte Stellung, so dass es zur Erzeugung der vorschlagsgemäßen Vorspannung der Schlossfalle 4 über den Eingriff zwischen der Spannfläche 14 des Spannhebels 16 und der Gegenspannfläche 15 der Schlossfalle 4 kommt.

Ferner ist der Spannmechanismus 9 ganz allgemein derart mit dem Kraftfahrzeugschloss 1 im Übrigen gekoppelt, dass der Spannmechanismus 9 im Rahmen eines Öffnungsvorgangs, in dem die Sperrklinke 5 ihren Aushebezustand erreicht, in den Lösezustand überführt wird. Der Öffnungsvorgang ist hier und vorzugsweise mit dem Ausheben der Blockierklinke 10 verbunden, die dabei über die Nase 12 den Spannhebel 16 in Fig. 1 im Gegenuhrzeigersinn und damit den Spannmechanismus 9 in den Lösezustand überführt. Anschließend kommt es zu einem Ausheben der Sperrklinke 5, sofern diese von der Blockierklinke 10 freigegeben worden ist.

Für das Auslösen des Öffnungsvorgangs ist hier und vorzugsweise ein Betätigungsmechanismus 18 vorgesehen, durch den die Sperrklinke 5 hier und vorzugsweise in ihren Aushebezustand freigegeben wird. Im Einzelnen ist es hier und vorzugsweise so, dass der Betätigungsmechanismus einen Betätigungshebel 19 aufweist, der über einen Betätigungsabschnitt 20 mit einem Mitnehmerabschnitt 21 der Blockierklinke 10 derart wechselwirkt, dass die Blockierklinke 10 durch eine Verschwenken des Betätigungshebels 19 um eine Betätigungshebelachse 19a, in Fig. 1 durch ein Schwenken des Betätigungshebels 19 im Uhrzeigersinn, in ihren Aushebezustand überführt wird. Dabei ist die Betätigungshebelachse 19a hier und vorzugsweise koaxial zu der Blockierklinkenachse 10a ausgerichtet, was einen besonders einfachen Eingriff zwischen dem Betätigungshebel 19 und der Blockierklinke 10 ermöglicht.

Dem Betätigungshebel 19 ist hier und vorzugsweise ein motorischer Betätigungsantrieb zugeordnet, so dass der Betätigungshebel 19 entsprechend motorisch verstellbar ist. Der Betätigungsantrieb weist bei dem dargestellten und insoweit bevorzugten Ausführungsbeispiel einen Antriebsmotor 22 auf, der über ein flexibles Zugmittel 23, hier über ein Antriebsseil, mit einem achsfernen Endbereich des Betätigungshebels 19 gekoppelt ist.

Von besonderer Bedeutung ist vorliegend die Synchronisierung der Bewegungen von Schlossfalle 4, Sperrklinke 5 und Spannhebel 16 während des Öffnungsvorgangs. Bei der Auslegung des Kraftfahrzeugschlosses 1 ist insbesondere Sorge dafür zu tragen, dass der Spannhebel 16 erst dann in Richtung des Spannzustands fällt, wenn der Eingriff zwischen Schlossfalle 4 und Sperrklinke 5 an der Eingriffsstelle 7 bereits zustande gekommen ist. Dies lässt sich durch eine geeignete Abstimmung der Federvorspannungen und der Massenträgheiten der betreffenden Komponenten erreichen.

Bemerkenswert bei dem dargestellten und insoweit bevorzugten Kraftfahrzeugschloss 1 ist die Erkenntnis, dass die oben angesprochene, langgestreckte Formgebung des Spannhebels 16 grundsätzlich für andere Funktionen innerhalb des Kraftfahrzeugschlosses genutzt werden kann. Vorliegend betrifft dies eine Schließhilfsfunktion des Kraftfahrzeugschlosses, für deren Umsetzung vorliegend eine Schließhilfsanordnung 24 vorgesehen ist. Die Schließhilfsfunktion wird hier und vorzugsweise durch einen motorischen Schließhilfsantrieb 25 umgesetzt, der hier und vorzugweise als separat vom Kraftfahrzeugschloss 1 ausgeschaltete Antriebseinheit vorgesehen ist. Dabei ist der Schließhilfsantrieb 25 über einen Bowdenzug 26 mit der Schließhilfsanordnung 24 gekoppelt. Grundsätzlich kann der Schließhilfsantrieb 25 auch Bestandteil des Kraftfahrzeugschlosses 1 sein.

Im Rahmen eines Schließhilfsvorgangs wird die Schlossfalle vorzugsweise aus den in Fig. 4 dargestellten Vorschließzustand in den in Fig. 1 dargestellten Hauptschließzustand angetrieben. Hierfür ist die Schließhilfsanordnung 24 mit einem Schließhilfshebel 27 ausgestattet, der um eine Schließhilfshebelachse 27a schwenkbar ist. Hier und vorzugsweise ist die Schließhilfshebelachse 27a koaxial zu der Schlossfallenachse 4a ausgerichtet. Im Rahmen des Schließhilfsvorgangs kommt ein Betätigungsabschnitt 28 des Schließhilfshebels 27 in Eingriff mit einem Mitnehmerabschnitt 29 der Schlossfalle 4, so dass der über den Schließhilfsantrieb 25 und den Bowdenzug 26 angetriebene Schließhilfshebel 27 die Schlossfalle 4 in den in Fig. 1 dargestellten Hauptschließzustand überführt. Interessant dabei ist die Tatsache, dass die Schließhilfsanordnung 24 ein Schaltelement 30 aufweist, das den Betätigungsabschnitt 28 bereitstellt. Das Schaltelement 30 ist um eine Schaltelementachse 30a am Schließhilfshebel 27 im Übrigen angelenkt und in Richtung des Eingriffs mit dem Mitnehmerabschnitt 29 der Schlossfalle 4 federvorgespannt.

Für den Fall, dass im Rahmen des Schließhilfsvorgangs über den Betätigungsmechanismus 18 ein Öffnungsvorgang ausgelöst wird, beispielsweise weil ein Einklemmfall vorliegt, wird der Spannhebel 16 wie oben angesprochen in den Lösezustand überführt, was mit einem Verschwenken des Spannhebels 16 in Fig. 4 im Gegenuhrzeigersinn verbunden ist. Dadurch kommt ein Betätigungsabschnitt 31 am Spannhebel 16 in Eingriff mit einem Mitnehmerabschnitt 32 am Schalthebel 30, so dass es zu einer Betätigung des Schalthebels 30, im Einzelnen zu einem Schwenken des Schalthebels 30 auf dem Schließhilfshebel 27, in Fig. 4 im Uhrzeigersinn kommt. Diese Betätigung des Schalthebels im Rahmen des Schließhilfsvorgangs bewirkt eine antriebstechnische Trennung der Schlossfalle 4 von der Schließhilfsnanordnung 24, indem der Betätigungsabschnitt 28 des Schließhilfshebels 27 außer Eingriff von dem Mitnehmerabschnitt 29 der Schlossfalle 4 kommt. Die Betätigung des Schaltelements 30 geht, wie oben erläutert, auf eine Verstellung des Spannmechanismus 9 vom Spannzustand in den Lösezustand zurück. Insoweit wird der Spannmechanismus 9, hier der Spannhebel 16, zusätzlich für die Betätigung des Schalthebels 30 der Schließhilfsanordnung 24 genutzt, was sich aufgrund der ebenfalls bereits angesprochenen, langgestreckten Anordnung des Spannhebels 16 in vorteilhafter Weise konstruktiv einfach umsetzen lässt. Der Betätigungsabschnitt 31 des Spannhebels 16 ist hier und vorzugsweise an einer Stelle des Spannhebels 16 zwischen der achsnahen Spannfläche 14 und dem achsfernen Steuerabschnitt 17 gelegen.

Nach einer weiteren Lehre, der eigenständige Bedeutung zukommt, wird eine Verstellelementanordnung eines Kraftfahrzeugs als solche beansprucht, die mit einem Verstellelement 2 und einem dem Verstellelement 2 zugeordneten, vorschlagsgemäßen Kraftfahrzeugschloss 1 ausgestattet ist. Auf alle Ausführungen zu dem vorschlagsgemäßen Kraftfahrzeugschloss 1, die geeignet sind, die Verstellelementanordnung zu erläutern, darf verwiesen werden.

In besonders bevorzugter Ausgestaltung handelt es sich bei dem Verstellelement 2 um ein Verschlusselement eines Kraftfahrzeugs, das mittels des Kraftfahrzeugschlosses 1 in einer Schließstellung fixierbar ist. Dabei handelt es sich bei dem Verschlusselement vorzugsweise um eine Kraftfahrzeugtür, wobei der Begriff "Kraftfahrzeugtür", wie oben erläutert, weit auszulegen ist.

Alternativ kann es sich bei dem Verstellelement auch um eine Sitzkomponente, insbesondere um eine Rückenlehne, eines Kraftfahrzeugs handeln. Dabei ist es so, dass die Sitzkomponente mittels des Kraftfahrzeugschlosses 1 in einer Gebrauchstellung, insbesondere in einer im wesentlichen aufrechten Sitzposition, fixierbar ist. Hier stellt sich die vorschlagsgemäße Lösung als besonders vorteilhaft dar, da die austragende Struktur einer Rückenlehne im Fahrbetrieb grundsätzlich stoßartige Belastungen in das die Rückenlehne fixierende Kraftfahrzeugschloss einleitet, was mit einer entsprechenden Klappemeigung einhergeht. Mit dem vorschlagsgemäßen Kraftfahrzeugschloss 1 lässt sich diese Klapperneigung durch das Verspannen von Schlossfalle 4 und Sperrklinke 5 wirksam reduzieren.

## Patentansprüche

1. Kraftfahrzeugschloss für die Fixierung eines Verstellelements (2) eines Kraftfahrzeugs, wobei das Kraftfahrzeugschloss (1) im montierten Zustand zur Fixierung des Verstellelements (2) mit einem Schließteil (3) wechselwirkt, wobei das Kraftfahrzeugschloss (1) eine verstellbare Schlossfalle (4) und eine der Schlossfalle (4) zugeordnete, verstellbare Sperrklinke (5) aufweist, wobei die Schlossfalle (4) in einen Hauptschließzustand, in dem sie in fixierendem Eingriff mit dem Schließteil (3) steht, und in einen Öffnungszustand, in dem sie das Schließteil (3) freigibt, verstellbar ist, wobei die Sperrklinke (5) in einen Einfallzustand, in dem sie an einer Eingriffsstelle (7) in Eingriff mit der Schlossfalle (4) steht und die Schlossfalle (4) an der Eingriffsstelle (7) im Hauptschließzustand hält und in einen Aushebezustand, in der sie die Schlossfalle (4) freigibt, verstellbar ist,
**dadurch gekennzeichnet,**
**dass** das Kraftfahrzeugschloss (1) einen Spannmechanismus (9) aufweist, dass der Spannmechanismus (9) bei im Hauptschließzustand befindlicher Schlossfalle (4) und bei im Einfallzustand befindlicher Sperrklinke (5) in einen Spannzustand bringbar ist, in dem der Spannmechanismus (9) eine mechanische Vorspannung in die Schlossfalle (4) in deren Öffnungsrichtung (6) einleitet und dass der Spannmechanismus (9) in einen Lösezustand bringbar ist, in dem die auf den Spannmechanismus (9) zurückgehende Vorspannung reduziert oder aufgelöst ist.

2. Kraftfahrzeugschloss nach Anspruch 1, **dadurch gekennzeichnet, dass** bei im Hauptschließzustand befindlicher Schlossfalle (4) ein Drehmoment auf die Schlossfalle (4) in Öffnungsrichtung über die Eingriffsstelle (7) ein Drehmoment auf die Sperrklinke (5) in Ausheberichtung erzeugt und dass der Sperrklinke (5) eine Blockierklinke (10) zugeordnet ist, die die im Einfallzustand befindliche Sperrklinke (5) blockiert und dass die Blockierklinke (10) in ihrem Aushebezustand den Spannmechanismus (9) im Lösezustand hält und in ihrem Einfallzustand den Spannmechanismus (9) in den Spannzustand freigibt.

3. Kraftfahrzeugschloss nach Anspruch 1 oder 2, **dadurch gekennzeichnet, dass** der Spannmechanismus (9) zur Erzeugung der Vorspannung eine Federanordnung (11) aufweist, vorzugsweise, dass der Spannmechanismus (9) durch die Federanordnung (11) in den Spannzustand vorgespannt ist.

4. Kraftfahrzeugschloss nach einem der vorhergehenden Ansprüche, **dadurch gekennzeichnet, dass** der Spannmechanismus (9) eine Spannfläche (14) aufweist, die im Spannzustand im Eingriff mit einer Gegenspannfläche (15) an der Schlossfalle (4) steht und dass über den Eingriff zwischen Spannfläche (14) und Gegenspannfläche (15) die auf die Schlossfalle (4) wirkende Vorspannung erzeugt wird.

5. Kraftfahrzeugschloss nach einem der vorhergehenden Ansprüche, **dadurch gekennzeichnet, dass** die Spannfläche (14) und die Gegenspannfläche (15) zur Erzeugung der Vorspannung nach Art eines Keilgetriebes miteinander wechselwirken.

6. Kraftfahrzeugschloss nach einem der vorhergehenden Ansprüche, **dadurch gekennzeichnet, dass** der Eingriff zwischen der Spannfläche (14) und der Gegenspannfläche (15) selbsthemmend ist derart, dass im Spannzustand eine Verstellung der im Hauptschließzustand befindlichen Schlossfalle (4) in deren Schließrichtung gesperrt ist, oder, dass der Eingriff zwischen der Spannfläche (14) und der Gegenspannfläche (15) formschlüssig ist derart, dass im Spannzustand eine Rückstellung der Schlossfalle (4) in deren Schließrichtung gesperrt ist.

7. Kraftfahrzeugschloss nach einem der vorhergehenden Ansprüche, **dadurch gekennzeichnet, dass** der Spannmechanismus (9) einen Spannhebel (16) aufweist, der für die Überführung des Spannmechanismus (9) in den Spannzustand und den Lösezustand um eine Spannhebelachse (16a) schwenkbar ist, vorzugsweise, dass die Spannhebelachse (16a) parallel zu einer Schwenkachse (4a) der Schlossfalle (4) und/oder zu einer Schwenkachse (5a) der Sperrklinke (5) ausgerichtet ist.

8. Kraftfahrzeugschloss nach einem der vorhergehenden Ansprüche, **dadurch gekennzeichnet, dass** die Spannfläche (14) an dem Spannhebel (16) angeordnet ist, vorzugsweise, dass die Spannfläche (14) über ein Schwenken des Spannhebels (16) zur Erzeugung des Spannzustands in Eingriff mit der Schlossfalle (4) und zur Erzeugung des Lösezustands außer Eingriff von der Schlossfalle (4) bringbar ist, weiter vorzugsweise, dass der Spannhebel (16) einen Steuerabschnitt (17) aufweist, über den der Spannmechanismus (9) in den Spannzustand und in den Lösezustand überführbar ist.

9. Kraftfahrzeugschloss nach einem der vorhergehenden Ansprüche, **dadurch gekennzeichnet, dass** der Spannmechanismus (9) derart mit dem Kraftfahrzeugschloss (1) im Übrigen, gekoppelt ist, dass der Spannmechanismus (9) im Rahmen eines Schließvorgangs, in dem die Schlossfalle (4) ihren Hauptschließzustand und die Sperrklinke (5) ihren Einfallzustand erreicht, insbesondere federgetrieben in den Spannzustand überführt wird.

10. Kraftfahrzeugschloss nach einem der vorhergehenden Ansprüche, **dadurch gekennzeichnet, dass** der Spannmechanismus (9) derart mit dem Kraftfahrzeugschloss (1) im Übrigen, gekoppelt ist, dass der Spannmechanismus (9) im Rahmen eines Öffnungsvorgangs, in dem die Sperrklinke (5) ihren Aushebezustand erreicht, in den Lösezustand überführt wird.

11. Kraftfahrzeugschloss nach einem der vorhergehenden Ansprüche, **dadurch gekennzeichnet, dass** ein Betätigungsmechanismus (18) vorgesehen ist, durch den die Sperrklinke (5) im Rahmen eines Öffnungsvorgangs in ihren Aushebezustand verstellt oder in ihren Aushebezustand freigegeben wird, vorzugsweise, dass der Betätigungsmechanismus (18) einen Betätigungshebel (19) aufweist, der mittels eines insbesondere motorischen Betätigungsantriebs verstellbar ist.

12. Kraftfahrzeugschloss nach einem der vorhergehenden Ansprüche, **dadurch gekennzeichnet, dass** eine Schließhilfsanordnung (24) vorgesehen ist, durch die die Schlossfalle (4) im Rahmen eines Schließhilfsvorgangs von einem Vorschließzustand in den Hauptschließzustand antreibbar ist, dass die Schließhilfsanordnung (24) ein Schaltelement (30) aufweist, dessen Betätigung im Rahmen des Schließhilfsvorgangs eine antriebstechnische Trennung der Schlossfalle (4) von der Schließhilfsanordnung (24) bewirkt und dass bei einer Verstellung des Spannmechanismus (9) vom Spannzustand in den Lösezustand der Spannmechanismus (9) das Schaltelement (30) betätigt.

13. Verstellelementanordnung eines Kraftfahrzeugs mit einem Verstellelement (2) und einem dem Verstellelement (2) zugeordneten Kraftfahrzeugschloss (1) nach einem der vorhergehenden Ansprüche.

14. Verstellelementanordnung nach Anspruch 13, **dadurch gekennzeichnet, dass** das Verstellelement (2) ein Verschlusselement eines Kraftfahrzeugs ist, das mittels des Kraftfahrzeugschlosses (1) in einer Schließstellung fixierbar ist, vorzugsweise dass das Verschlusselement (2) eine Kraftfahrzeugtür ist.

15. Verstellelementanordnung nach Anspruch 13 oder 14, **dadurch gekennzeichnet, dass** das Verstellelement (2) eine Sitzkomponente, insbesondere eine Rückenlehne, ist und dass die Sitzkomponente mittels des Kraftfahrzeugschlosses (1) in einer Gebrauchsstellung fixierbar ist.

## Claims

1. Motor vehicle lock for securing a movable element (2) of a motor vehicle, wherein the motor vehicle lock (1) in the fitted state interacts with a striker (3) in order to secure the movable element (2), wherein the motor vehicle lock (1) comprises an adjustable catch (4) and an adjustable locking pawl (5) assigned to the catch (4), wherein the catch (4) is adjustable into a main locking state, in which it is in secure engagement with the striker (3), and into an opening state, in which it releases the striker (3), wherein the locking pawl (5) is adjustable into an entry state, in which it engages with the catch (4) at a point of engagement (7), and holds the catch (4) in the main locking state at the point of engagement (7), and into a lifted state, in which it releases the catch (4),
**characterized in that**
the motor vehicle lock (1) comprises a tensioning mechanism (9), **in that** when the catch (4) is in the main locking state and the locking pawl (5) is in the entry state the tensioning mechanism (9) can be brought into a tensioned state in which the tensioning mechanism (9) introduces a mechanical preload into the catch (4) in its opening direction (6), and **in that** the tensioning mechanism (9) can be brought into a relaxed state, in which the preload originating from the tensioning mechanism (9) is reduced or cancelled.

2. Motor vehicle lock according to Claim 1, **characterized in that** with the catch (4) in the main locking state a torque acting on the catch (4) in the opening direction via the point of engagement (7) generates a torque acting on the locking pawl (5) in a lifting direction and **in that** an interlocking pawl (10), which locks the locking pawl (5) in the entry state, is assigned to the locking pawl (5), and **in that** the interlocking pawl (10) in its lifted state holds the tensioning mechanism (9) in the relaxed state and in its entry state releases the tensioning mechanism (9) into the tensioned state.

3. Motor vehicle lock according to Claim 1 or 2, **characterized in that** the tensioning mechanism (9) for generating the preload comprises a spring arrangement (11), preferably **in that** the tensioning mechanism (9) is preloaded into the tensioned state by the spring arrangement (11).

4. Motor vehicle lock according to one of the preceding claims, **characterized in that** the tensioning mechanism (9) has a tensioning face (14), which in the tensioned state engages with a counter-tensioning face (15) on the catch (4) and **in that** the preload acting on the catch (4) is generated by the engagement between the tensioning face (14) and the counter-tensioning face (15) .

5. Motor vehicle lock according to one of the preceding claims, **characterized in that** the tensioning face (14) and the counter-tensioning face (15) for generating the preload interact with one another in the manner of a wedge mechanism.

6. Motor vehicle lock according to one of the preceding claims, **characterized in that** the engagement between the tensioning face (14) and the counter-tensioning face (15) is self-locking, in such a way that in the tensioned state an adjustment of the catch (4), currently in the main locking state, in its locking direction is prevented, or, **in that** the engagement between the tensioning face (14) and the counter-tensioning face (15) is positively interlocking, in such a way that in the tensioned state a return of the catch (4) in its locking direction is prevented.

7. Motor vehicle lock according to one of the preceding claims, **characterized in that** the tensioning mechanism (9) comprises a tensioning lever (16), which in order to bring the tensioning mechanism (9) into the tensioned state and the relaxed state is capable of pivoting about a tensioning lever axis (16a), preferably **in that** the tensioning lever axis (16a) is oriented parallel to a pivot axis (4a) of the catch (4) and/or to a pivot axis (5a) of the locking pawl (5).

8. Motor vehicle lock according to one of the preceding claims, **characterized in that** the tensioning face (14) is arranged on the tensioning lever (16), preferably **in that** the tensioning face (14), via a pivoting of the tensioning lever (16), can be brought into engagement with the catch (4) in order to produce the tensioned state and disengaged from the catch (4) in order to produce the relaxed state, and further preferably **in that** the tensioning lever (16) comprises a control portion (17), which serves to bring the tensioning mechanism (9) into the tensioned state and into the relaxed state.

9. Motor vehicle lock according to one of the preceding claims, **characterized in that** the tensioning mechanism (9) is otherwise coupled to the motor vehicle lock (1) in such a way that in the course of a closing process, in which the catch (4) reaches its main locking state and the locking pawl (5) reaches its entry state, the tensioning mechanism (9) is in particular sprung into the tensioned state.

10. Motor vehicle lock according to one of the preceding claims, **characterized in that** the tensioning mechanism (9) is otherwise coupled to the motor vehicle lock (1) in such a way that in the course of an opening process, in which the locking pawl (5) reaches its lifted state, the tensioning mechanism (9) is brought into the relaxed state.

11. Motor vehicle lock according to one of the preceding claims, **characterized in that** an actuating mechanism (18) is provided, by means of which the locking pawl (5) is adjusted into its lifted state or is released into its lifted state in the course of an opening process, preferably **in that** the actuating mechanism (18) comprises an actuating lever (19), which is adjustable by means of an actuating drive, in particular a motor-driven actuating drive.

12. Motor vehicle lock according to one of the preceding claims, **characterized in that** an assisted closing arrangement (24) is provided, which in the course of an assisted closing process serves to drive the catch (4) from a pre-locking state into the main locking state, **in that** the assisted closing arrangement (24) comprises a switch element (30), the actuation of which in the course of the assisted closing process produces a drive separation of the catch (4) from the assisted closing arrangement (24), and **in that** in an adjustment of the tensioning mechanism (9) from the tensioned state into the relaxed state the tensioning mechanism (9) actuates the switch element (30).

13. Movable element arrangement of a motor vehicle having a movable element (2) and a motor vehicle lock (1) assigned to the movable element (2) according to one of the preceding claims.

14. Movable element arrangement according to Claim 13, **characterized in that** the movable element (2) is a closing element of a motor vehicle, which can be secured in a closed position by means of the motor vehicle lock (1), preferably **in that** the closing element (2) is a motor vehicle door.

15. Movable element arrangement according to Claim 13 or 14, **characterized in that** the movable element (2) is a seat component, in particular a back rest, and **in that** the seat component can be secured in a position of use by means of the motor vehicle lock (1).

## Revendications

1. Serrure de véhicule automobile pour le blocage d'un élément déplaçable (2) d'un véhicule automobile, la serrure de véhicule automobile (1) à l'état monté coopérant avec une pièce de fermeture (3) en vue du blocage de l'élément déplaçable (2), la serrure de véhicule automobile (1) possédant un loquet de serrure (4) déplaçable et un cliquet d'arrêt (5) déplaçable associé au loquet de serrure (4), le loquet de serrure (4) pouvant être déplacé dans un état de fermeture principal, dans lequel il se trouve en prise bloquante avec la pièce de fermeture (3), et dans un état d'ouverture, dans lequel il libère la pièce de fermeture (3), le cliquet d'arrêt (5) pouvant être déplacé dans un état de chute de loquet, dans lequel il se trouve en prise avec le loquet de serrure (4) au niveau d'un point de prise (7) et maintient le loquet de serrure (4) dans l'état de fermeture principal au niveau du point de prise (7), et un état de relevage, dans lequel il libère le loquet de serrure (4),
**caractérisée en ce**
**que** la serrure de véhicule automobile (1) possède un mécanisme de serrage (9), **en ce que** le mécanisme de serrage (9), lorsque le loquet de serrure (4) se trouve dans l'état de fermeture principal et le cliquet d'arrêt (5) dans l'état de chute de loquet, peut être amené dans un état de serrage dans lequel le mécanisme de serrage (9) induit une précontrainte mécanique dans le loquet de serrure (4) dans la direction de son ouverture (6), et **en ce que** le mécanisme de serrage (9) peut être amené dans un état de relâchement, dans lequel la précontrainte renvoyée sur le mécanisme de serrage (9) est réduite ou dissoute.

2. Serrure de véhicule automobile selon la revendication 1, **caractérisée en ce que** lorsque le loquet de serrure (4) se trouve dans l'état de fermeture principal, un couple sur le loquet de serrure (4) dans la direction de l'ouverture produit par le biais du point de prise (7) un couple sur le cliquet d'arrêt (5) dans la direction de relevage, et **en ce qu'**un cliquet de blocage (10) est associé au cliquet d'arrêt (5), lequel bloque le cliquet d'arrêt (5) qui se trouve dans l'état de chute de loquet, et **en ce que** le cliquet de blocage (10), dans son état de relevage, maintient le mécanisme de serrage (9) dans l'état de relâchement et, dans son état de chute de loquet, libère le mécanisme de serrage (9) dans l'état de serrage.

3. Serrure de véhicule automobile selon la revendication 1 ou 2, **caractérisée en ce que** le mécanisme de serrage (9) possède un arrangement de ressort (11) destiné à générer la précontrainte, de préférence **en ce que** le mécanisme de serrage (9) est précontraint dans l'état de serrage par l'arrangement de ressort (11).

4. Serrure de véhicule automobile selon l'une des revendications précédentes, **caractérisée en ce que** le mécanisme de serrage (9) possède une surface de serrage (14) qui, à l'état de serrage, est en prise avec une surface de serrage homologue (15) au niveau du loquet de serrure (4) et **en ce que** la précontrainte agissant sur le loquet de serrure (4) est produite par le biais de la prise entre la surface de serrage (14) et la surface de serrage homologue (15).

5. Serrure de véhicule automobile selon l'une des revendications précédentes, **caractérisée en ce que** la surface de serrage (14) et la surface de serrage homologue (15) coopèrent entre elles en vue de produire la précontrainte à la manière d'une transmission à clavette.

6. Serrure de véhicule automobile selon l'une des revendications précédentes, **caractérisée en ce que** la prise entre la surface de serrage (14) et la surface de serrage homologue (15) est autobloquante de sorte que dans l'état de serrage, un déplacement du loquet de serrure (4) qui se trouve dans l'état de fermeture principal dans la direction de sa fermeture est bloqué, ou **en ce que** la prise entre la surface de serrage (14) et la surface de serrage homologue (15) est à complémentarité de formes de sorte que dans l'état de serrage, un retour du loquet de serrure (4) dans la direction de sa fermeture est bloqué.

7. Serrure de véhicule automobile selon l'une des revendications précédentes, **caractérisée en ce que** le mécanisme de serrage (9) possède un levier de serrage (16) qui peut pivoter autour d'un axe de levier de serrage (16a) pour le transfert du mécanisme de serrage (9) dans l'état de serrage et l'état de relâchement, de préférence **en ce que** l'axe de levier de serrage (16a) est orienté parallèlement à un axe de pivotement (4a) du loquet de serrure (4) et/ou à un axe de pivotement (5a) du cliquet d'arrêt (5).

8. Serrure de véhicule automobile selon l'une des revendications précédentes, **caractérisée en ce que** la surface de serrage (14) est disposée au niveau du levier de serrage (16), de préférence **en ce que** la surface de serrage (14) peut être amenée en prise avec le loquet de serrure (4) par un pivotement du levier de serrage (16) en vue de produire l'état de serrage et hors de prise avec le loquet de serrure (4) en vue de produire l'état de relâchement, encore de préférence **en ce que** le levier de serrage (16) possède une portion de commande (17) par le biais de laquelle le mécanisme de serrage (9) peut être transféré dans l'état de serrage et dans l'état de relâchement.

9. Serrure de véhicule automobile selon l'une des revendications précédentes, **caractérisée en ce que** le mécanisme de serrage (9) est au demeurant couplé à la serrure de véhicule automobile (1) de telle sorte que le mécanisme de serrage (9), dans le cadre d'une opération de fermeture, dans laquelle le loquet de serrure (4) atteint son état de fermeture principal et le cliquet d'arrêt (5) son état de chute de loquet, est transféré dans l'état de serrage notamment en étant entraîné par ressort.

10. Serrure de véhicule automobile selon l'une des revendications précédentes, **caractérisée en ce que** le mécanisme de serrage (9) est au demeurant couplé à la serrure de véhicule automobile (1) de telle sorte que le mécanisme de serrage (9), dans le cadre d'une opération d'ouverture, dans laquelle le cliquet d'arrêt (5) atteint son état de relevage, est transféré dans l'état de relâchement.

11. Serrure de véhicule automobile selon l'une des revendications précédentes, **caractérisée en ce qu'**un mécanisme d'actionnement (18) est présent, par lequel le cliquet d'arrêt (5), dans le cadre d'une opération d'ouverture, est déplacé dans son état de relevage ou est libéré dans son état de relevage, de préférence **en ce que** le mécanisme d'actionnement (18) possède un levier d'actionnement (19) qui peut être déplacé au moyen d'un mécanisme d'entraînement d'actionnement notamment motorisé.

12. Serrure de véhicule automobile selon l'une des revendications précédentes, **caractérisée en ce qu'**un arrangement d'aide à la fermeture (24) est présent, par lequel le loquet de serrure (4), dans le cadre d'une opération d'aide à la fermeture, peut être entraîné d'un état de préfermeture à l'état de fermeture principal, **en ce que** l'arrangement d'aide à la fermeture (24) possède un élément de commutation (30) dont l'actionnement dans le cadre de l'opération d'aide à la fermeture provoque une séparation en transmission du loquet de serrure (4) par rapport à l'arrangement d'aide à la fermeture (24) et **en ce que** lors d'un déplacement du mécanisme de serrage (9) de l'état de serrage à l'état de relâchement, le mécanisme de serrage (9) actionne l'élément de commutation (30).

13. Arrangement d'élément déplaçable d'un véhicule automobile, comprenant un élément déplaçable (2) et une serrure de véhicule automobile (1) selon l'une des revendications précédentes associée à l'élément déplaçable (2).

14. Arrangement d'élément déplaçable selon la revendication 13, **caractérisé en ce que** l'élément déplaçable (2) est un élément de fermeture d'un véhicule automobile qui peut être bloqué dans une position de fermeture au moyen de la serrure de véhicule automobile (1), de préférence **en ce que** l'élément de fermeture (2) est une portière de véhicule automobile.

15. Arrangement d'élément déplaçable selon la revendication 13 ou 14, **caractérisé en ce que** l'élément déplaçable (2) est un composant de siège, notamment un dossier, et **en ce que** le composant de siège peut être bloqué dans une position d'utilisation au moyen de la serrure de véhicule automobile (1).
